# EUROPEAN PATENT SPECIFICATION

(11) **EP 2 970 679 B1**
(45) Date of publication and mention of the grant of the patent: **22.11.2023**
(21) Application number: 14717457.7
(22) Date of filing: 13.03.2014
(51) Int. Cl.: C09C 1/40, C09C 1/02, C09D 7/61, C09D 7/45, C09D 7/40, C08K 3/26, C08K 3/34

(54) **A PROCESS FOR MANUFACTURING NANOPARTICLES IN A CONCENTRATED SLURRY**
VERFAHREN ZUR HERSTELLUNG VON NANOPARTIKELN IN EINER KONZENTRIERTEN AUFSCHLÄMMUNG
PROCÉDÉ POUR LA FABRICATION DE NANOPARTICULES EN UNE SUSPENSION ÉPAISSE CONCENTRÉE

(30) Priority: 13.03.2013 FI 20135243
(43) Date of publication of application: 20.01.2016
(73) Proprietor: Nordkalk OY AB, 21600 Pargas (FI)
(72) Inventor: SNÅRE, Mathias, FI-21600 Pargas (FI); VOCHEV, Artem, FI-21600 Pargas (FI); HAKALA, Juuso, FI-21600 Pargas (FI)
(74) Representative: Berggren Oy
(86) International application number: PCT/FI2014/050185
(87) International publication number: WO 2014/140427

(56) References cited:
- WO-A1-2012/113876
- CN-A- 102 912 672
- US-A1- 2014 065 412

## Description

### Background of the Invention

### Field of the Invention

The present invention concerns a process for manufacturing nanoparticles in a concentrated aqueous slurry by dispersion of inorganic particle agglomerates. Further, the invention concerns the nanoparticle slurry obtained using said process.

### Description of Related Art

Nanoparticle research is currently an area of intense scientific interest due to a wide variety of potential applications in biomedical, optical and electronic fields. Particularly their synthetic methods are being constantly developed, with an attempt to overcome problems, such as their uncontrolled agglomeration.

For example, nano-sized precipitated calcium carbonate (nano-PCC) is manufactured by forming slurries of nano PCC agglomerates whereafter mixing/dispersion and dewatering is performed. Deagglomeration of nanoagglomerates is, however, limited and achieving a particle size below 1000 nm, is highly energy intensive. Furthermore, the deagglomeration is generally performed in low solid concentrations but this scenario is both more energy intensive and the post-processing dewatering stage becomes highly challenging.

There is a demand for an improved procedure, since this traditionally used alternative gives a slurry that still contains non-dispersed agglomerates, and since the mixing according to this alternative requires excess intensity due to inefficient dispersion and the large amounts of water present. Further, the traditional procedures have not been feasible for concentrating particles of a size below 700nm.

US 2012098163 A1, in turn, concerns the preparation of nanocomposites, which include nanoparticles in polymer matrices. The preparation includes a stage of mixing to improve the dispersion of the nanoparticles.

However, the addition of supplementary components to the slurry can make it complex and difficult to handle, which might lead to inconsistencies.

EP 0573150 at least partially deals with some of the problems associated with the addition of supplementary components. It discloses a method for preparing a composite particulate pigmentary material comprising forming aqueous dispersions of two particulate materials, however, agglomerates are still formed in the process.

WO 2012/113876 A1 discloses a coating composition comprising an aqueous dispersion of submicron natural ground calcium carbonate particles contained in a liquid binder. The resultant coating may constitute either a clear coat or a glossing and opacifying coating. The composition comprises, in the case of a clear coating, at least one ground natural calcium carbonate having a median diameter of between 0.05 and 0.15 µm. In the case of a glossing and opacifying coating, the composition comprises at least one ground natural calcium carbonate having a median diameter of between 0.05 and 0.3 µm and at least one pigment having a refractive index of greater than or equal to 2.5.

CN 102912672 A discloses a preparation method for fluid calcium carbonate slurry with a high solid content of 50%, used for high-grade paper industry.

US 2014/065412 A1 discloses a transparent or semi-transparent coating prepared from coating mixture containing conventional coating components mixed with a coating slurry containing dispersed inorganic nano-particles in a content of 1-70 w-% of the slurry.

### Summary of the Invention

It is an object of the present invention to provide a novel process for manufacturing consistent nanoparticle slurries.

Particularly, it is an object of the invention to provide such a process suitable for use in manufacturing concentrated and consistent slurries of nano-PCC.

These and other objects, together with the advantages thereof over known processes, are achieved by the present invention, as hereinafter described and claimed.

Thus, the present invention concerns a process for manufacturing nanoparticles in a concentrated slurry based on an aqueous solvent by the efficient dispersion of inorganic particle agglomerates therein.

More specifically, the process of the present invention is characterized by what is stated in the characterizing part of Claim 1.

Considerable advantages are obtained by means of the invention. Thus, the present invention introduces nano-particles that can be evenly and efficiently dispersed in an aqueous slurry.

Due to this novel procedure, the content of the nanoparticles (i.e. their concentration in the slurry) can be high during the dispersion stage, thus providing the possibility of processing (by ultrasonification) slurries with high solids contents, i.e. smaller amounts of water, compared to prior procedures.

This obtained slurry containing dispersed particles can be used to manufacture end products, such as coatings and adhesives, with superior optical, mechanical and rheological properties, such as high gloss, durability and hardness as well as scrub and scratch resistance even at high solid loadings of these materials.

Furthermore, the obtained slurry can be dried (e.g. using a spray dryer) and thereafter be used to manufacture end products, such as plastics, rubbers, coatings and adhesives

Next, the invention will be described more closely with reference to the attached drawings and a detailed description.

### Brief Description of the Drawings

Figure 1 illustrates the intensity needed for dispersing calcium carbonate agglomerates to nanoparticles in a solid content range of 40-50w-%.
Figure 2 illustrates the gloss 60° of satin type paints as a function of the content of PVC.
Figure 3 illustrates the gloss 60° of semi-gloss type paints as a function of the content of PVC.
Figure 4 illustrates the tensile strength of binders with varying amounts of nano PCC and conventional binders.

### Description of Embodiments of the Invention

The present invention concerns a process for manufacturing nanoparticles using a slurry based on an aqueous solvent. In the process, inorganic particle agglomerates are dispersed into a consistent slurry. Particularly, said inorganic particles or their agglomerates are treated in said aqueous solvent at a solids content of 30-75w-% by adding dispersing agent(s) and by carrying out ultrasonic treatment at an intensity of 5-1000W/cm² on this concentrated slurry. Thus, the dispersing treatment is carried out on a concentrated slurry.

The used intensity is 10 to 500W/cm². The upper limits are set by the limitations of the current ultrasonic devices, whereas an intensity below 5W/cm² has been discovered to leave some undispersed agglomerates. The particle size of the final dispersed nanoparticles depends on the used energy of the ultrasonic treatment..

The conditions during the dispersion treatment of the invention are preferably close to ambient conditions, with a particularly preferred temperature being 0-95°C, and a particularly preferred pressure being 0.5-50bar depending on the intensity used.

The nanoparticles can be formed from particles of calcium carbonate, more preferably precipitated or ground calcium carbonate (PCC or GCC), and most suitably PCC. These materials can contain traces of organic compounds, which can also be transferred to the nanoparticles used in the invention. Due to the negligible contents of these organic compounds, the material of the nano-particles is still referred to as inorganic. Generally, these compounds form agglomerates in aqueous solvents.

The term "nano-particle" is intended to include any particles having a mean particle diameter of less than 1µm. In the present context, a particle diameter is 50-200nm.

These nanoparticles are generally obtained by the dispersion of said agglomerates to separate these into smaller particles in a slurry. According to the present invention, said slurry contains dispersed inorganic nanoparticles in a content of 30-75w-%, preferably 45-65w-%, and most suitably 45-55w-%, of the slurry, during the treatment, i.e. before any dilution.

The slurry provided by the present invention is stable and non-settling. Non-settling, for the purposes of the present invention, means that the particles dispersed in the slurry do not settle out of the slurry. Typically less than 20 % or less of the particles , preferably 10 % or less of the particles settle out.

The slurry is intended to include any aqueous dispersions or mixtures formed using solvents or solutions that are based on water and optionally one or more co-solvents, being either inorganic or organic solvents.

The slurry contains additives, as the most important ones being dispersing agents. These can, however, include also conventional binders.

The dispersing agent(s) are used to facilitate the complete dispersion of the nanoparticles into a consistent homogeneous slurry. The dispersing agents are selected from the group of surface-active polymers consisting of polycarboxylates, polyacrylates, polyethers and fatty-acid derivatives or a mixture thereof. Their content is generally maintained at a level of 0.1-8w-%, preferably 2-4w-%. The content of the dispersing agent(s) is indirectly proportional to the dry-matter content of the slurry, *i.e.* the higher the dry-matter content of the slurry, the lower the amount of dispersing agent is needed to stabilise the slurry, and to prevent reagglomeration and segregation.

Said dispersion agent(s) can be added to the slurry either on-site during the treatment of the present invention, or off-site before treatment, i.e. to the agglomerates.

Further, an optional drying step can be carried out after the ultrasonic dispersion treatment, in order to provide the nanoparticles, as such, with a dry-matter content of 75 to 100w-%, preferably close to 100w-% (with a limitation caused by the fact that not all water can be removed from the particles).

The final (possibly diluted) slurry, or the dried particles thereof, can be used, for example, to prepare a coating for any solid substrate or to prepare a paper coating, e.g. by mixing the slurry with optional further coating components, to form a coating mixture, and applying said coating mixture onto a surface of the substrate or the paper. The further coating components include one or more agents selected from the group of binders, dispersing agents, wetting agents, anti-foaming agents, viscosity modifiers and coalesents (film-forming agents).

The above described coatings can be applied on any surfaces, which generally are surfaces of solid products, such as concrete, plastic, glass or fibrous surfaces. However, it is preferred to use these coatings on fibrous solid products, such as paper, wood or furniture. The coating is preferably applied as a uniform coating on at least one surface of said product, whereby the coating will cover the entire surface. The application is then preferably followed by a step of drying to remove the solvent, or at least to remove excess solvent.

Alternatively, the final (possibly diluted) slurry, or the dried particles thereof, can be used, for example, to prepare an adhesive, plastic, rubber, plaster, mortar, concrete, or pharmaceutical or medical product.

The following non-limiting examples are intended merely to illustrate the advantages obtained with the embodiments of the present invention.

### Examples

### Example 1

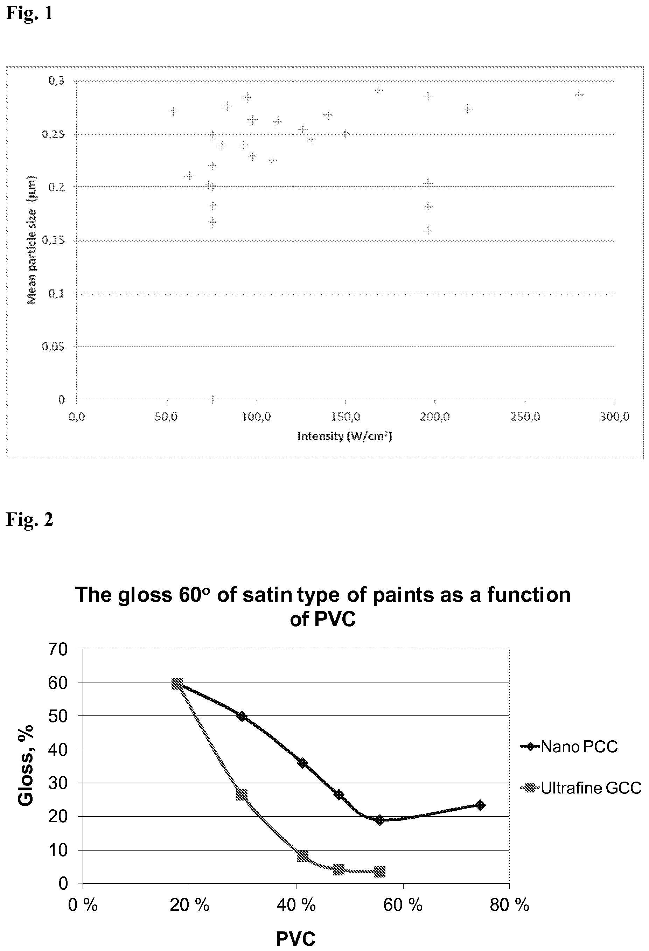

An aqueous slurry of PCC agglomerates (d_{50%}=5µm) was obtained from a carbonatization plant, the agglomerates containing 40 to 50w-% of nano-sized calcium carbonate. A polyacrylate dispersant was added into a content of 3w-% to the agglomerate slurry, and the slurry was subjected to ultrasonic treatment with the same specific energy input at an intensity between 50 and 300 W/cm2. The results of Figure 1 shows stabilized and dispersed nanoparticle slurries with an average particle size below 200 nm.

### Example 2

The objective of this example was to demonstrate the difference between dispersed slurry of nano-sized calcium carbonate and ultrafine GCC. Coating was performed in a satin type of paint formulation. At reference point (PVC (Pigment volume concentration) 18 %) titanium dioxide acts as an only pigment. Amount of titanium dioxide was kept constant and amount of binder and nano PCC or ultrafine GCC were variable quantities throughout the test. After the reference point, the PVC is increased by nano PCC or ultrafine GCC.

Substances tested:
1. Ultrafine GCC, average size 0,7 µm
2. Dispersed nano calcium carbonate, average size 200 nm

The results are shown in Figure 2. As may be seen from the figure with increasing PVC the gloss of nano-sized calcium carbonate coatings stay above 20 % and with ultrafine GCC gloss rapidly declines below 20 %. It is caused by the fact that with nano-sized particles surfaces of coatings stay smoother and therefore they scatter less light than with ultrafine GCC.

### Example 3

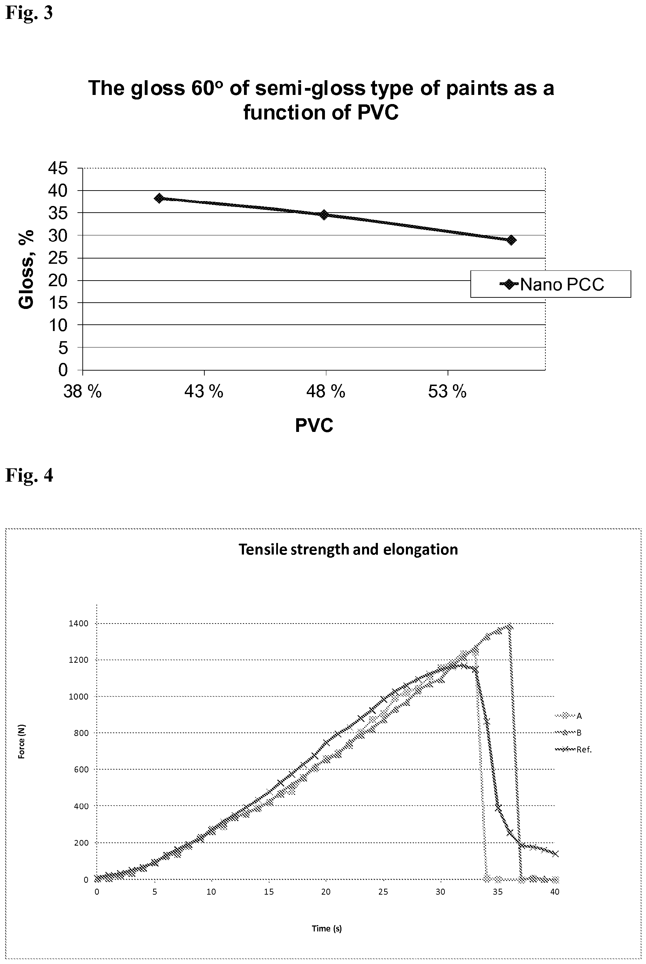

The same method is used in this example as in Example 2, with the exception of the coating being performed in semi-gloss type of paint formulation. The results are shown in Figure 3. As is evident from these results, gloss 60° maintains quite high despite of very high PVC levels.

### Example 4

The objective of this example was to demonstrate the tensile strength of coatings and adhesives. Tensile strength describes both binding to substrate and cohesion of polymer/filler matrix. It was performed by applying adhesives (Table 1) between two wood blocks and measuring the required amount of strength to separate them. Ultrafine GCC is used in a reference adhesive. Adhesives A and B were manufactured by mixing definite amounts of the reference adhesive without ultrafine GCC and a dispersed nano-sized calcium carbonate slurry.

**Table 1**

| | **Ref.** | A | B |
|---|---|---|---|
| Water (w-%) | 37,3 % | 50,2 % | 51,2 % |
| CaCO₃ (w-%) | 18 % | 19,9 % | 24,4 % |
| Binder + additives (w-%) | 44,7 % | 29,9 % | 24,4 % |

As will emerge from Table 1 and the results of Figure 4, adhesives A and B contain much more water and less binder than reference adhesive. However, the tensile strength and elongation is still maintained or even improved in adhesive B.

The patent is not limited to aforementioned examples. The range of particle size is affected by specific energy input used. Additionally, the level of gloss and mechanical properties are application specific and not restricted by the examples used.

## Claims

1. A process for manufacturing nanoparticles in a concentrated slurry based on an aqueous solvent by dispersion of inorganic particle agglomerates of calcium carbonate, using water as the aqueous solvent, **characterized by**
treating said inorganic particles or their agglomerates in said aqueous solvent at a solids content of 30-75w-% of the slurry by adding dispersing agent(s) selected from the group of surface-active polymers consisting of polycarboxylates, polyacrylates, polyethers and fatty-acid derivatives or a mixture thereof, and by carrying out ultrasonic treatment at an intensity of 10 - 500 W/cm², whereby a concentrated slurry is obtained, where the particle diameter is 50 - 200 nm.

2. The process of Claim 1, **characterized by** using particles of ground or precipitated calcium carbonate (GCC or PCC), most suitably PCC.

3. The process of any preceding claim, **characterized by** treating the inorganic particles or their agglomerates in said aqueous solvent at a solids content of 45-65w-%.

4. The process of any preceding claim, **characterized by** maintaining the conditions during the treatment close to ambient conditions, with a particularly preferred temperature being 0-95°C, and a particularly preferred pressure being 0.5-50bar.

5. A slurry of inorganic nanoparticles of calcium carbonate in an aqueous solvent, where water is used as the aqueous solvent, **characterized in that** the slurry contains
- dispersed inorganic nanoparticles in a content of 30 - 75 w-% of the slurry, wherein the particle diameter is 50 - 200 nm, and
- dispersing agent(s) selected from the group of surface-active polymers consisting of polycarboxylates, polyacrylates, polyethers and fatty-acid derivatives or a mixture thereof.

6. The slurry of claim 5, **characterized in that** the dispersed nanoparticles have a mean particle diameter of 200nm.

## Patentansprüche

1. Verfahren zur Herstellung von Nanopartikeln in einer konzentrierten Slurry basierend auf einem wässrigen Lösungsmittel durch Dispersion von anorganischen Partikel-Agglomeraten aus Calciumcarbonat unter Verwendung von Wasser als wässrigem Lösungsmittel, **gekennzeichnet durch** das Behandeln der anorganischen Partikel oder ihrer Agglomerate in dem wässrigen Lösungsmittel bei einem Feststoffgehalt von 30-75 Gew.-% der Slurry durch Zugabe von Dispergiermittel(n), ausgewählt aus der Gruppe der oberflächenaktiven Polymere, bestehend aus Polycarboxy-laten, Polyacrylaten, Polyethern und Fettsäurederivaten oder einer Mischung dieser, und durch Durchführung einer Ultraschallbehandlung bei einer Intensität von 10-500 W/cm², wodurch eine konzentrierte Slurry erhalten wird, bei der der Partikeldurchmesser 50-200 nm beträgt.

2. Verfahren nach Anspruch 1, **gekennzeichnet durch** die Verwendung von Partikeln aus gemahlenem oder gefälltem Calciumcarbonat (GCC oder PCC), am geeignetsten PCC.

3. Verfahren nach einem der voranstehenden Ansprüche, **gekennzeichnet durch** das Behandeln der anorganischen Partikel oder ihrer Agglomerate in dem wässrigen Lösungsmittel bei einem Feststoffgehalt von 45-65 Gew.-%.

4. Verfahren nach einem der voranstehenden Ansprüche, **gekennzeichnet durch** das Halten der Bedingungen während der Behandlung in der Nähe der Umgebungsbedingungen, mit einer besonders bevorzugten Temperatur von 0-95 °C und einem besonders bevorzugten Druck von 0,5-50 bar.

5. Slurry von anorganischen Nanopartikeln aus Calciumcarbonat in einem wässrigen Lösungsmittel, wobei
Wasser als das wässrige Lösungsmittel verwendet wird, **dadurch gekennzeichnet, dass** die Slurry Folgendes enthält
- dispergierte anorganische Nanopartikel in einem Gehalt von 30 - 75 Gew.-% der Slurry, wobei der Partikel-durchmesser 50 - 200 nm beträgt, und
- Dispergiermittel, ausgewählt aus der Gruppe der oberflächenaktiven Polymere, bestehend aus Polycarboxylaten, Polyacrylaten, Polyethern und Fettsäurederivaten oder einer Mischung dieser.

6. Slurry nach Anspruch 5, **dadurch gekennzeichnet, dass** die dispergierten Nanopartikel einen mittleren Partikeldurchmesser von 200 nm aufweisen.

## Revendications

1. Procédé de fabrication de nanoparticules en suspension concentrée à base de solvant aqueux par dispersion d'agglomérats de particules inorganiques de carbonate de calcium, utilisant l'eau comme solvant aqueux, **caractérisé par**
le traitement desdites particules inorganiques ou leurs agglomérats dans ledit solvant aqueux à une teneur en solides de 30 à 75 % en poids de la suspension en ajoutant un ou des agents dispersants choisis dans le groupe des polymères tensioactifs constitués de polycarboxylates, de polyacrylates, de polyéthers et de dérivés d'acides gras ou d'un mélange de ceux-ci, et en effectuant un traitement ultrasonique à une intensité de 10 à 500 W/cm², moyennant quoi une suspension concentrée est obtenue, où le diamètre des particules est de 50 à 200 nm.

2. Procédé selon la revendication 1, **caractérisé par** l'utilisation de particules de carbonate de calcium broyé ou précipité (GCC ou PCC), plus particulièrement de PCC.

3. Procédé selon une quelconque revendication précédente, **caractérisé par** le traitement des particules inorganiques ou de leurs agglomérats dans ledit solvant aqueux à une teneur en solides de 45 à 65 % en poids.

4. Procédé selon une quelconque revendication précédente, **caractérisé par** le maintien des conditions pendant le traitement proche des conditions ambiantes, une température particulièrement préférée étant de 0 à 95 °C, et une pression particulièrement préférée étant de 0,5 à 50 bar.

5. Suspension de nanoparticules inorganiques de carbonate de calcium dans un solvant aqueux, où l'eau est utilisée comme solvant aqueux, **caractérisée en ce que** la suspension contient
- des nanoparticules inorganiques dispersées dans une teneur de 30 à 75 % en poids de la suspension, le diamètre des particules étant de 50 à 200 nm, et
- un ou des agent(s) dispersant(s) choisi(s) dans le groupe des polymères tensioactifs constitués par les polycarboxylates, les polyacrylates, les polyéthers et de dérivés d'acides gras ou d'un mélange de ceux-ci.

6. Suspension selon la revendication 5, **caractérisée en ce que** les nanoparticules dispersées ont un diamètre moyen de particule de 200 nm.
